(19) Europäisches Patentamt
European Patent Office
Office européen des brevets

(11) **EP 2 549 732 A1**

(12) **EUROPEAN PATENT APPLICATION**

(43) Date of publication:
**23.01.2013 Bulletin 2013/04**

(51) Int Cl.:
***H04N 1/195*** (2006.01)   ***H04N 1/00*** (2006.01)
***G06F 3/042*** (2006.01)

(21) Application number: **12164745.7**

(22) Date of filing: **19.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.07.2011 JP 2011159873**

(71) Applicant: **Panasonic Corporation**
**Osaka 571-8501 (JP)**

(72) Inventors:
• **Ogawa, Toshiyuki**
**Osaka, 540-6207 (JP)**
• **Shirai, Naomi**
**Osaka, 540-6207 (JP)**

(74) Representative: **Eisenführ, Speiser & Partner**
**Postfach 10 60 78**
**28060 Bremen (DE)**

(54) **Document scanning system which initiates image capture if a user finger pressing the document does not move**

(57) The present invention enables a user to record a captured image at a desired timing without performing any special operation while pushing down a document with a hand and properly maintaining a paper surface during scanning, by detecting that a user's finger remains still for at least a predetermined time period, and initiating recording.

Fig. 11B

**Description**

CROSS-REFERENCE TO RELATED APPLICATIONS

The present application claims priority under 35 U.S.C. §119 of Japanese Application No. 2011-159873, filed on July 21, 2011, the disclosure of which is expressly incorporated by reference herein in its entirety.

BACKGROUND OF THE INVENTION

1. Field of the Invention

The present invention relates to an image processing apparatus that processes an image obtained by scanning a document such as a book, and a document scanning system having the image processing apparatus.

2. Description of Related Art

A book scanner (document camera) is widely used, which can capture, from above, a page of a book in a naturally opened state and scan an image of the page. Such a book scanner enables a user to sequentially scan images of pages while turning the pages, thereby making it possible to efficiently digitize books (Japanese Patent Laid-open Publication No. 2001-103240).

In a book of a common type having a binding on the spine thereof, a center portion of the two-page spread may sag downward in a V-shape or a gap may be generated among pages. It is thus necessary to properly maintain a paper surface at the time of scanning (image capturing) (in other words, it is necessary to prevent displacement of an image caused by distortion of a paper surface) by pressing down the paper surface with both hands.

In using the conventional scanner, however, it is difficult for a user to perform a certain operation (pressing down a shutter button, clicking a mouse, and the like, for example) to scan a document while pressing down a paper surface with both hands. To address the circumstance above, a retainer may be used to press down a book as a substitute for a hand. When capturing a plurality of pages, however, it is necessary to perform a cumbersome operation in which a user has to set the book in the retainer every time s/he scans a page. In addition, it is also possible to automatically scan the document at a predetermined interval. In such a case, however, unnecessary waiting time may occur when the interval is set too long, or image scanning may fail by being carried out in the middle of turning a page when the interval is set too short.

SUMMARY OF THE INVENTION

The present invention has been devised to address the circumstances of the above-described conventional technology. A main advantage of the present invention is to provide an image processing apparatus and a document scanning system having the same that enable a user to record a captured image at a desired timing without any special operation while the user presses down a document with a hand and properly maintains a paper surface during scanning.

An image processing apparatus of the present invention includes: a captured image obtainer obtaining a captured image of a paper surface of a document captured along with a placing surface; an outline element extractor extracting an outline element of the document from the captured image; a specific area setter setting a specific area in the captured image; a finger identifier identifying a user's finger in the specific area; a motion detector detecting motion of the finger identified by the finger identifier; and an image recorder recording the captured image in a case where the image recorder has determined that the user has given an instruction to perform an operation based on a detection result from the motion detector.

BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:

Fig. 1 illustrates an entire configuration of a document scanning system according to the present embodiment;
Fig. 2 is a block diagram illustrating schematic configurations of a book scanner 1 and a PC 2;
Fig. 3 is a flowchart illustrating steps of document scanning by the present document scanning system in a basic image capturing mode;
Fig. 4 is a flowchart illustrating steps of outline detection (ST 103) shown in Fig. 3;
Figs. 5A and 5B are schematic diagrams each describing a procedure of the outline detection;
Fig. 6 is a flowchart illustrating steps of mesh model generation (ST 104) shown in Fig. 3;
Figs. 7A and 7B are schematic diagrams each describing a procedure of the mesh model generation;
Fig. 8 is a schematic diagram illustrating an image planarized based on a mesh model;
Fig. 9 is a flowchart illustrating steps of document scanning by the present document scanning system in an automatic image capturing mode;
Fig. 10 is a flowchart illustrating steps of specific area setting (ST 406) shown in Fig. 9;
Fig. 11A is a schematic diagram describing a procedure of the specific area setting;
Fig. 11 B is a schematic diagram describing a procedure of finger identification in the specific area;

Fig. 12A is a schematic diagram describing a state before making a change in a procedure to re-set the specific area;

Fig. 12B is a schematic diagram describing a state after making the change in the procedure to re-set the specific area;

Fig. 13A is a schematic diagram describing a state before making a change in a procedure to re-set the specific area;

Fig. 13B is a schematic diagram describing a state after making the change in the procedure to re-set the specific area;

Fig. 14 is a flowchart illustrating steps of re-capture determination (ST 417) shown in Fig. 9;

Fig. 15A is a schematic diagram describing a procedure of operation cancel area setting; and

Fig. 15B is a schematic diagram describing a procedure of finger identification in the operation cancel area.

## DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

### First Embodiment

Hereinafter, an embodiment of the present invention is described with reference to the drawings.

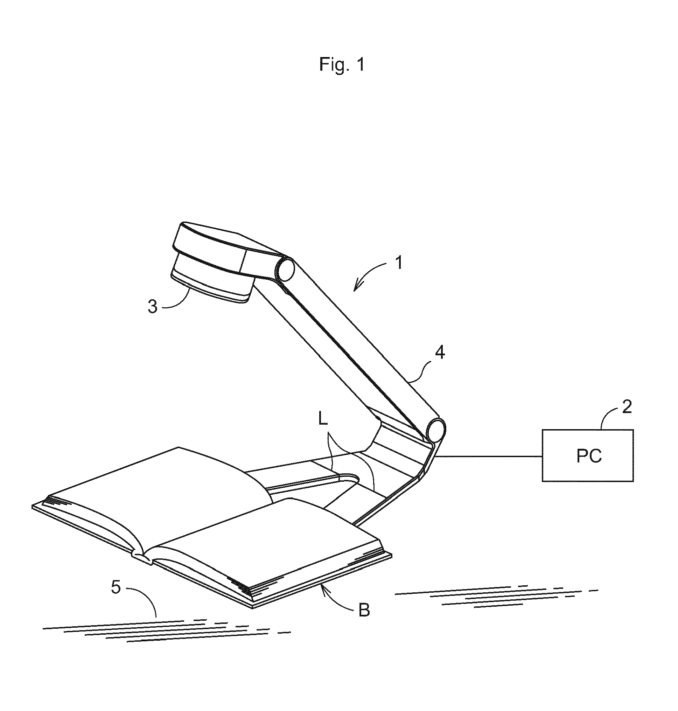

Fig. 1 illustrates an entire configuration of a document scanning system according to the present embodiment. The document scanning system scans an image of a paper surface of a book (document) B, and obtains image data of the paper surface. The document scanning system is configured with a book scanner (image inputting device) 1 and a PC (image processing apparatus) 2.

The book scanner 1 includes a camera 3 capturing an image of a paper surface of the book B and a stand 4 holding the camera 3. The stand 4 is mounted on a placing surface 5 such as a desk. In a state where the book B is placed on the placing surface 5 provided directly below the camera 3, the camera 3 captures an image of a paper surface of the book B. When the book scanner 1 is used in a basic image capturing mode, an image of a paper surface is captured in a state where the book B is naturally opened, and the captured image of a two-page spread of the book B is thus obtained. Further, planarization is performed on an image of a distorted paper surface in order to obtain a planarized image of the paper surface of the two-page spread.

Further, in capturing an image of a paper surface of the book B, there may be a case in which a user needs to press down the paper surface of the book B in order to properly maintain the paper surface. Even in such a case, the book scanner 1 in the automatic image capturing mode identifies the position and motion of the user's finger pressing down the book B and recognizes from them a user's instruction to perform an operation. The user can thus capture an image at a desired timing without any special operation (pressing down a shutter button, clicking a mouse on the PC 2, and the like, for example). Accordingly, it is possible to effectively prevent displacement and the like in an image caused by distortion of a paper surface and to record a desired image.

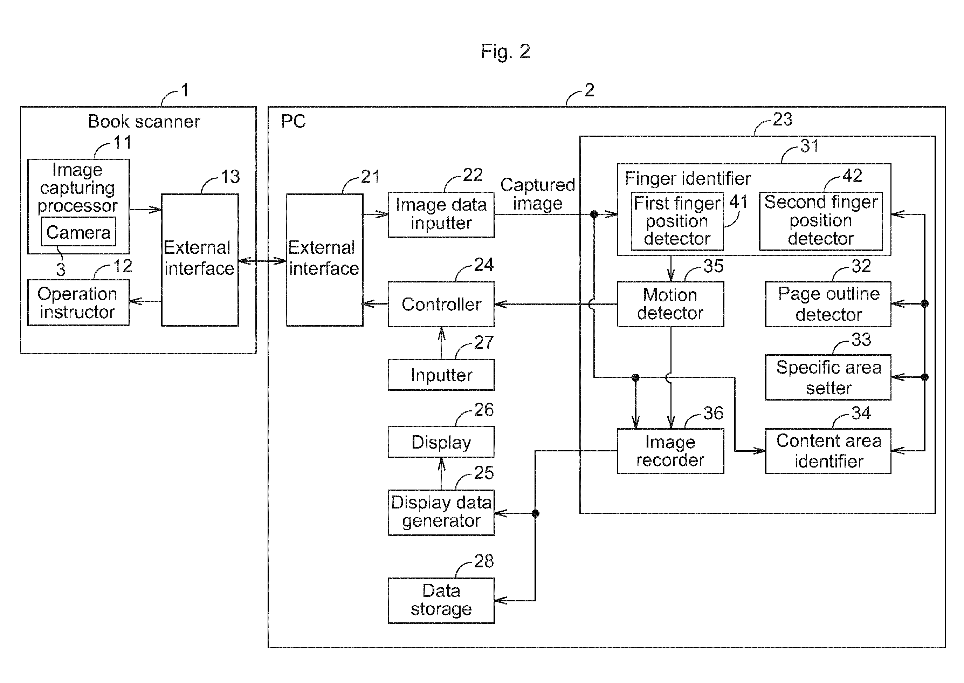

Fig. 2 is a block diagram illustrating schematic configurations of the book scanner 1 and the PC 2. The book scanner 1 includes an image capturing processor 11 having the camera 3, an operation instructor 12, and an external interface 13. The PC 2 includes an external interface 21, an image data inputter (captured image obtainer) 22, an image processor 23, a controller 24, a display data generator 25, a display 26, an inputter 27, and a data storage 28. The image processor 23 and the display data generator 25 of the PC 2 are achieved by software processing that a CPU executes with a program such as an image processing application or the like.

In the PC 2, image capturing conditions such as resolution, a frame rate, shutter speed, and the like of an image to be captured by the book scanner 1 are input with an operation through the inputter 27 configured with a keyboard or the like. These operation conditions are transmitted from the controller 24 to the book scanner 1. In the book scanner 1, the image capturing processor 11 performs a predetermined operation according to an instruction from the operation instructor 12 based on the operation conditions transmitted from the PC 2.

The image data inputter 22 of the PC 2 stores, in a memory, image data transmitted from the book scanner 1, and outputs the image data to the image processor 23 when needed. The image data inputter 22 obtains a captured image of a document (paper surface of a book, in this example) B captured along with the placing surface 5.

The image processor 23 includes a finger identifier 31, a page outline detector (outline element extractor) 32, a specific area setter 33, a content area identifier 34, a motion detector 35, and an image recorder 36. The finger identifier 31 identifies a finger of a user in the automatic image capturing mode. The page outline detector 32 detects an outline of a page of the book B from a captured image. The specific area setter 33 sets a predetermined area (hereinafter, "specific area") used by the finger identifier 31 to detect a finger in the captured image. The content area identifier 34 identifies an area having contents (information identified by human sense, such as letters, drawings, and the like, in this embodiment) included in the captured image. The motion detector 35 detects motion of a finger (fingertip) identified by the finger identifier 31. When it is determined that a user has given an instruction to perform an operation based on the detection result from the motion detector 35, the image recorder 36 stores the captured image data in the data storage 28 and, at the same time, transmits the captured image data to the display data generator 25.

The finger identifier 31 identifies a position and direction of a fingertip based on skin color and shape information of the finger. In this embodiment, the finger identifier 31 performs HSV transformation on an RGB image (captured image) from the camera 3 and extracts a range of hue and saturation of the skin color in the HSV-transformed image as a skin color area. Then, the extracted skin color area is binarized to calculate the outline of the finger. The shape of the calculated outline is identified (compared with a plurality of finger shape patterns prepared in advance), and thus the number of fingers as well as a coordinate of each fingertip are estimated. In addition, the direction of the finger is calculated based on the position and outline of the fingertip. In addition, the finger identifier 31 has a first finger position detector 41 and a second finger position detector 42, each of which identifies a position and the like of left and right fingers, respectively.

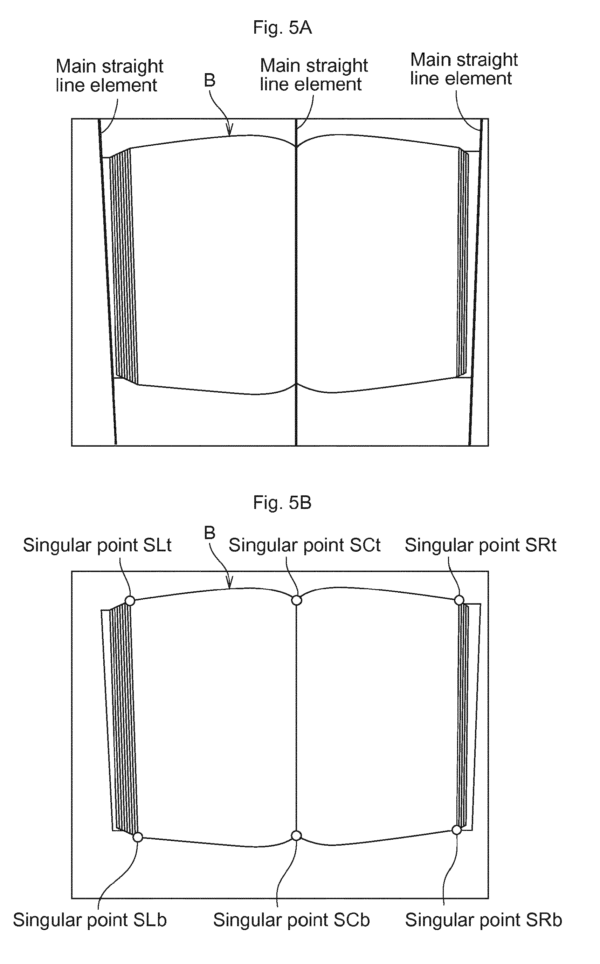

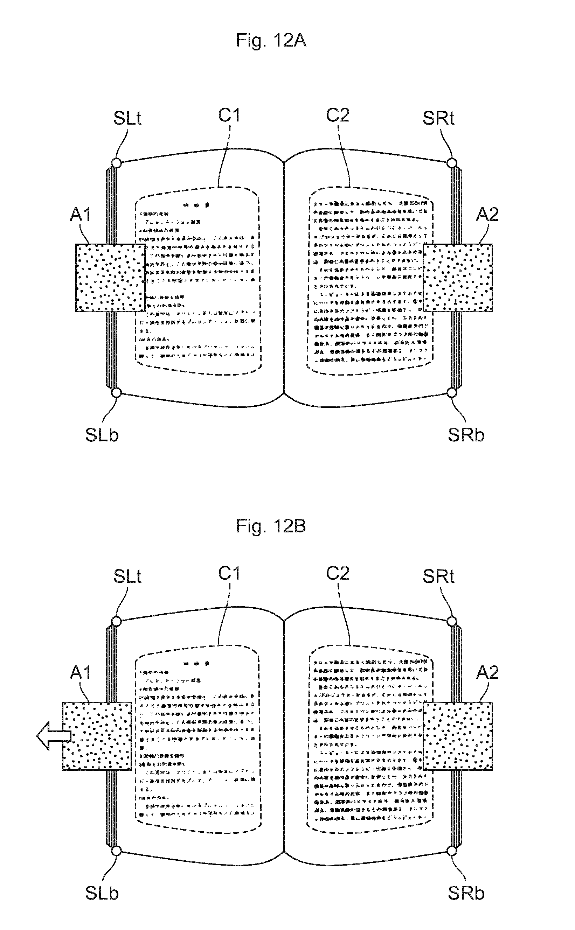

The content area identifier 34 determines a content area based on outline information (outline elements such as six singular points SLt, SLb, SRt, SRb, SCt, and SCb in Fig. 5B, in this embodiment) detected by the page outline detector 32. In this embodiment, a table of information including a plurality of document sizes and corresponding content area information (coordinates) is prepared in advance. The content area identifier 34 can determine content areas C1 and C2 (see Figs. 12A and 12B) based on the table information. In this case, when the information in the table does not include any document size that matches with the document size calculated based on the outline information, the coordinates of the content area are determined based on a document size having the closest value.

Alternatively, the content area identifier 34 may estimate a content area by extracting a hue, saturation, and value ranges corresponding to the background color of the document in the image on which HSV transformation has been performed by the finger identifier 31. Further, a content area may be calculated based on a predetermined formula. In addition, although the present embodiment describes an example in which one content area is detected on each of the left and right pages, a greater number of content areas may be detected in one page.

The motion detector 35 detects motion of the finger (fingertip) identified by the finger identifier 31 based on how much the finger shifts between frames. In detecting the motion, the specific area is set as ROI (Region of Interest). When the position of the fingertip shifts by a predetermined value (100 pixels, for example) or less per 10 frames in the ROI, it is determined that the finger is at rest.

Further, methods used for finger identification, content area identification, and motion detection are not limited to the above-described methods, and it is also possible to employ known technologies as appropriate.

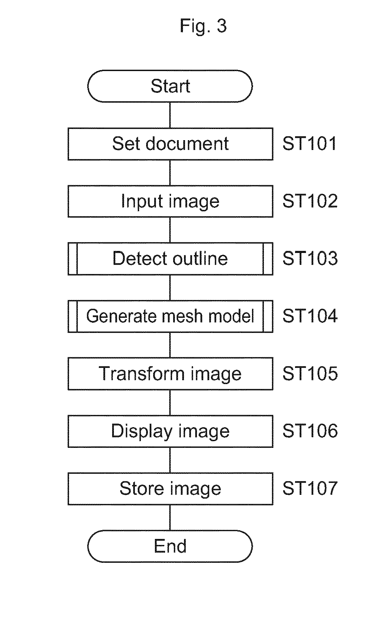

Fig. 3 is a flowchart illustrating steps of document scanning in the basic image capturing mode of the present document scanning system. First, a user sets a book (document) below the camera 3 of the book scanner 1 (ST 101). Then, after the book scanner 1 and a predetermined application in the PC 2 are started, image input (that is, image capturing) is started in the book scanner 1, and the captured image data is transmitted to the PC 2 (ST 102). The image data inputter 22 of the PC 2 obtains the captured image of a paper surface of the book B captured along with the placing surface 5.

In the PC 2, the page outline detector 32 detects the outline of the page of the book B in the captured image (ST 103). Subsequently, based on the detected outline information, a mesh model is generated with respect to the entirety of the book B (ST 104). Thereafter, based on the generated mesh model, the image recorder 36 performs image transformation to planarize the image (ST 105). In this embodiment, an image is planarized by projective transformation (affine transformation). Accordingly, it is possible to obtain an image similar to what is scanned by a flatbed scanner.

The planarized image data obtained above is transmitted to the display data generator 25 so that display data is generated. Based on the generated display data, the planarized image data is displayed on the display 26 (ST 106). Thereby, the user can confirm whether or not the image has been properly recorded. The planarized image data is then stored in the data storage 28 (ST 107).

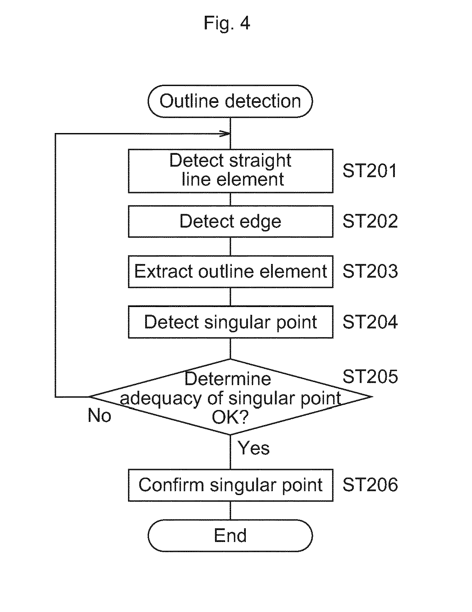

Fig. 4 is a flowchart illustrating steps of the outline detection (ST 103) shown in Fig. 3. Figs. 5A and 5B are schematic diagrams each describing a procedure of the outline detection. In this embodiment, a main straight line element which is used to roughly recognize a placement state of the book B and a plurality of singular points which are edge points at the page top, bottom, left, right, and center (left-right direction center) are detected as outline information of the book B, from the captured image of the paper surface of the book B captured along with the placing surface 5.

First, the main straight line element of an outer shape of the entire book is detected (ST 201). In this embodiment, as shown in Fig. 5A, two straight lines indicating left and right side edges of the outer shape of the entire book B (side edges of a cover page, in general), and one straight line indicating a seam (center) between the left and right pages are detected within the captured image. This straight line element detection may be performed by the Hough transformation.

Further, edge detection is performed on the captured image (ST 202). This edge detection may be performed with the Canny method. Then, outline elements (pixels configuring the outline of the document) in the obtained edge image are extracted (ST 203). Thereafter, singular points, which are edge points at the page top, bottom, left, and right, are detected based on the obtained outline elements (ST 204). In this embodiment, six singular points SLt, SLb, SRt, SRb, SCt, and SCb are detected as the top, bottom, left, and right edge points of the page in the captured image of the two-page spread as shown in Fig. 5B.

Then, adequacy of the singular points obtained in the singular point detection (ST 204) is determined (ST 205). Herein, the adequacy of the singular points, which are edge points at the page top, bottom, left, and right, is determined by comparing the obtained singular points with the straight line elements obtained in the straight line element detection (ST 201). When the singular points are determined as adequate, the singular points are confirmed (ST 206).

Each of the edge detection (ST 202), the outline element extraction (ST 203), and the singular point detection (ST 204) may be simultaneously performed with the straight line element detection (ST 201).

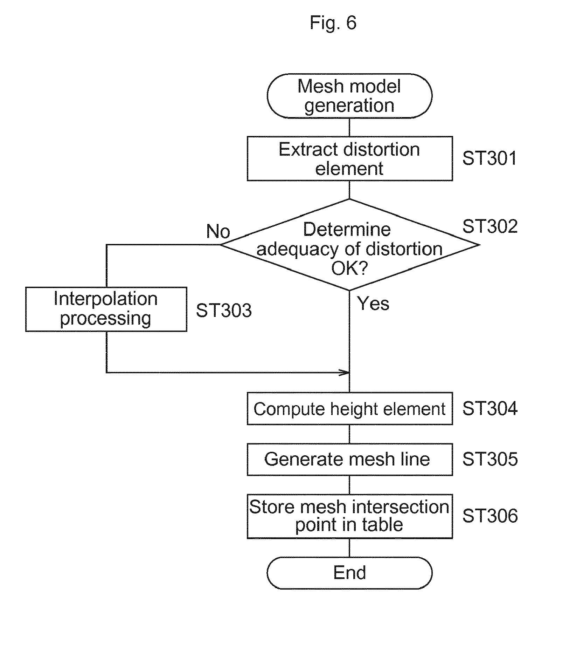

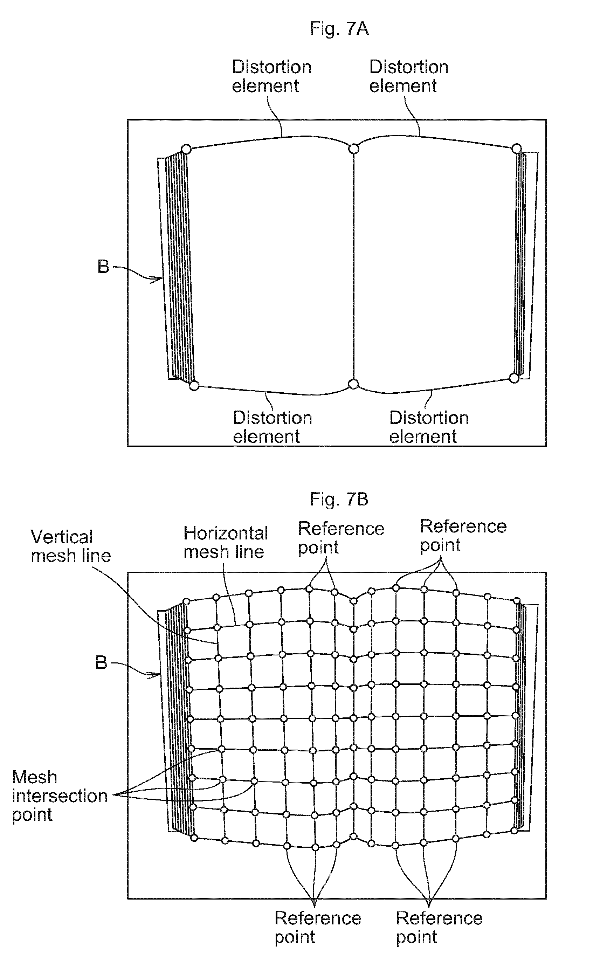

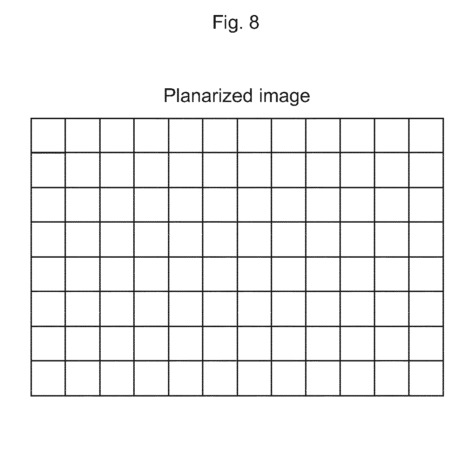

Fig. 6 is a flowchart illustrating steps of a mesh model generation (ST 104) shown in Fig. 3. Figs. 7A and 7B are schematic diagrams each describing a procedure of the mesh model generation. Fig. 8 is a schematic diagram illustrating an image planarized based on the mesh model. Herein, a mesh model is generated for the entire paper surface of the book from the image of the paper surface of the book B captured along with the placing surface 5.

First, a distortion element is extracted, the distortion element indicating a distorted outline of the paper surface of the book B (ST 301). As shown in Fig. 7A, the outlines of upper and lower edges of the paper surface are displayed in a distorted state expanding outward. The distorted outline elements (pixels configuring an outline) of the upper and lower edges of the page are extracted from the edge image obtained in the edge detection (ST 202) shown in Fig. 4. Then, adequacy of the distortion elements is determined based whether or not the distortion elements are continuous (ST 302). At this point, when the distortion elements are determined as not adequate, interpolation processing is performed on disconnected portions (ST 303). Thereby, the distortion elements become continuous without any break.

Thereafter, a computation is performed to convert the distortion element into a height element (ST 304). The outlines of the upper and lower edges of the page are shown in a distorted state in the captured image because the paper surface is three-dimensionally distorted so as to project toward the upper side. Thus, the height element, which indicates a three-dimensionally curved state of the upper and lower edges of the page, can be obtained based on the distortion elements indicating the outlines of the upper and lower edges of the page. Specifically, the heights (coordinates of a Z axis) of the upper and lower edges of the page with respect to the placing surface 5 are obtained at regular intervals. With the height element, the actual length of the upper and lower edges of the page can be estimated.

Thereafter, horizontal and vertical mesh lines are generated (ST 305). The horizontal mesh line and the vertical mesh line intersect with each other at a mesh intersection point. A coordinate of the mesh intersection point is stored in a mesh table (ST 306). Herein, as shown in Fig. 7B, based on the height elements of the upper and lower edges of the page, a coordinate of a reference point is obtained, the reference point dividing a curvature, which indicates the upper and lower edges of the page, into equal intervals according to the number of mesh divisions. By connecting reference points corresponding to each other on the upper and lower edges, respectively, a vertical mesh line is obtained. Then, the coordinates of points (mesh intersection points) that divide the vertical mesh line into equal intervals according to the number of mesh divisions are obtained. By connecting the points, the horizontal mesh line is obtained.

The image obtained based on the mesh model as described above is planarized and stored by the image recorder 36 as shown in Fig. 8.

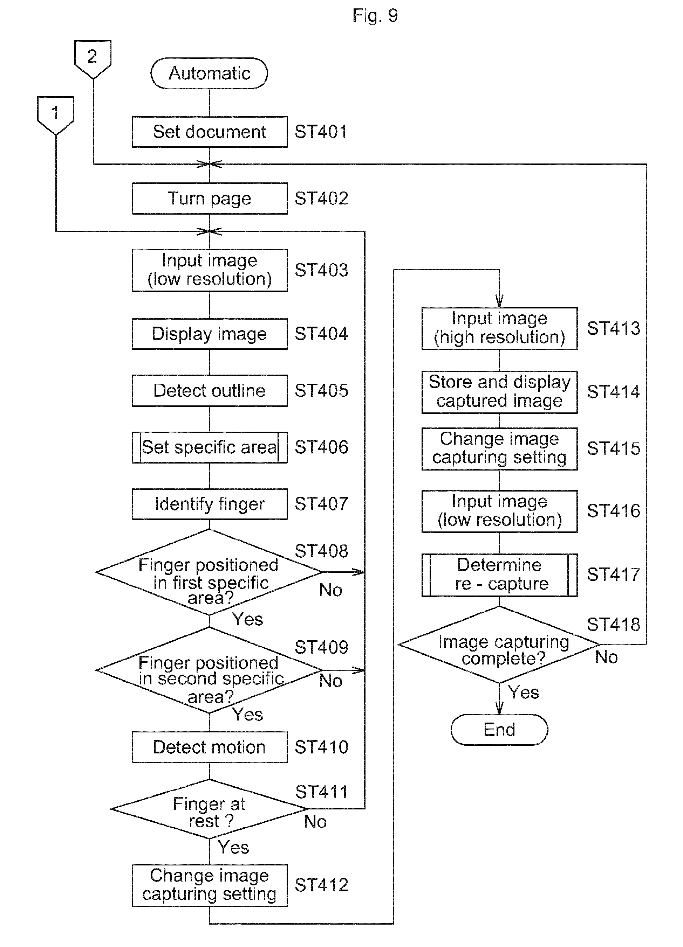

Fig. 9 is a flowchart illustrating steps of document scanning by the present document scanning system in the automatic image capturing mode. In the following descriptions on the automatic image capturing mode, detailed descriptions on the procedures similar to the above-described basic image capturing mode are omitted.

First, a user sets a book below the camera 3 of the book scanner 1 (ST 401). Pages are turned to open a page from which image capturing is started (ST 402). At this point, the automatic image capturing mode is selected as an operation mode of the book scanner 1.

The user can select the operation mode by performing a predetermined action (pressing down a button, for example) with respect to the book scanner 1 or the PC 2. Alternatively, the user may select the operation mode based on a captured image without any particular action. For example, a configuration is possible in which the automatic image capturing mode is selected only when the upper edge of the outline of the book B is positioned on guidelines L provided on legs of the book scanner 1 shown in Fig. 1.

Thereafter, image capturing is started in the book scanner 1, and the data of the captured image is sequentially transmitted to the PC 2 at a predetermined frame rate (ST 403). The captured image here has relatively low image resolution (VGA, 30 fps, for example) and is displayed as a real time image in a first image display frame in the screen on the display 26 of the PC 2 (ST 404).

Subsequently, the page outline detector 32 detects the outline of the page of the book B from the captured image and obtains coordinate data for each of the six singular points SLt, SLb, SRt, SRb, SCt and SCb as outline information (ST 405). Then, based on the coordinate data of the singular points, the specific area setter 33 sets a specific area with which the finger identifier 31 identifies a finger (ST 406). In this embodiment, two specific areas (first specific area and second specific are) are set so as to correspond to left and right fingers, respectively.

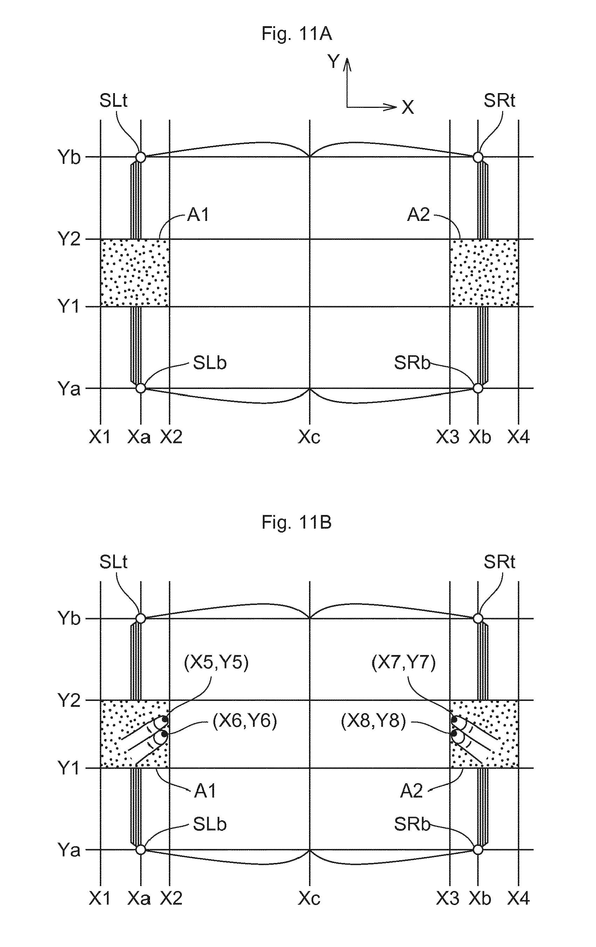

As described in detail later, each of the first and second specific areas A1 and A2 has a rectangular shape and is provided to each of the left and right sides of the document in the captured image as shown in Fig. 11A. At least a portion of each of the first and the second specific areas A1 and A2 overlaps with the paper surface of the document. In this embodiment, the first and the second specific areas A1 and A2 each also include an area outside the paper surface. Thereby, it is possible to ensure that the left and right edges of the page are included in the specific area (area in which finger identification is performed). Accordingly, it is also possible to prevent a failure where a finger cannot be identified despite the fact that the fingertip is positioned on the page.

Next, the finger identifier 31 identifies a finger in each of the calculated first and second specific areas A1 and A2 (ST 407). The finger identifier 31 further determines whether or not the left and right fingers (fingertips) are positioned within the first and second specific areas A1 and A2, respectively (ST 408 and ST 409). In this embodiment, finger motion is detected (ST 410) only when both the left and right fingers are determined to be positioned within the respective specific area (ST 408: Yes, ST 409: Yes). In detecting the motion, when it is determined that the left and right fingers of the user in the first and second specific areas A1 and A2 remain still for a predetermined time period or longer (in other words, when it is determined that the user has given an instruction to record the captured image) (ST 411: Yes), the controller 24 changes a resolution setting for image capturing in the camera 3 (ST 412). Thereby, image data having relatively high resolution is input to the PC 2 (ST 413).

Next, the image recorder 36 displays the high-resolution image data on the display 26 through the display data generator 25 and, at the same time, stores the image data in the data storage 28 (ST 414). At this time, the high-resolution image is displayed in a second image display frame in the display 26, separately from the first image display frame displaying the real time captured image. Further, when an image is stored in ST 414, it is preferable that the book scanner 1 or the PC 2 produce a shutter sound in order to give a notification to a user. Furthermore, display of an image in ST 414 may be omitted when it is difficult to provide the second image display frame due to a limited screen size of a display or when a user does not need to display the image. Thereafter, the controller 24 changes the resolution setting for image capturing in the camera 3 (ST 415) so that image data having relatively low resolution is input to the PC 2 again (ST 416).

Thereafter, with respect to the high-resolution image stored in the data storage 28, re-capture determination is performed in which the user determines whether or not re-capturing is necessary (ST 417). Accordingly, the user can re-capture an image when the user is not satisfied with the automatically captured image.

The steps from ST 402 to ST 417 are repeated with respect to each page whose image needs to be captured. When it is determined that images of all the pages have been captured in the end (ST 418: Yes), the automatic image capturing mode is terminated. This termination is determined, for example, based on a predetermined action (instruction to terminate automatic capturing mode) taken by the user with respect to the book scanner 1 or the PC 2. Further, although images of fingers in the specific areas are captured along with an image of the document, the image recorder 36 is capable of erasing the finger images in the captured image. Furthermore, similar to the case of the basic image capturing mode, the image recorder 36 can perform image processing such as planarization as needed before storing the captured image.

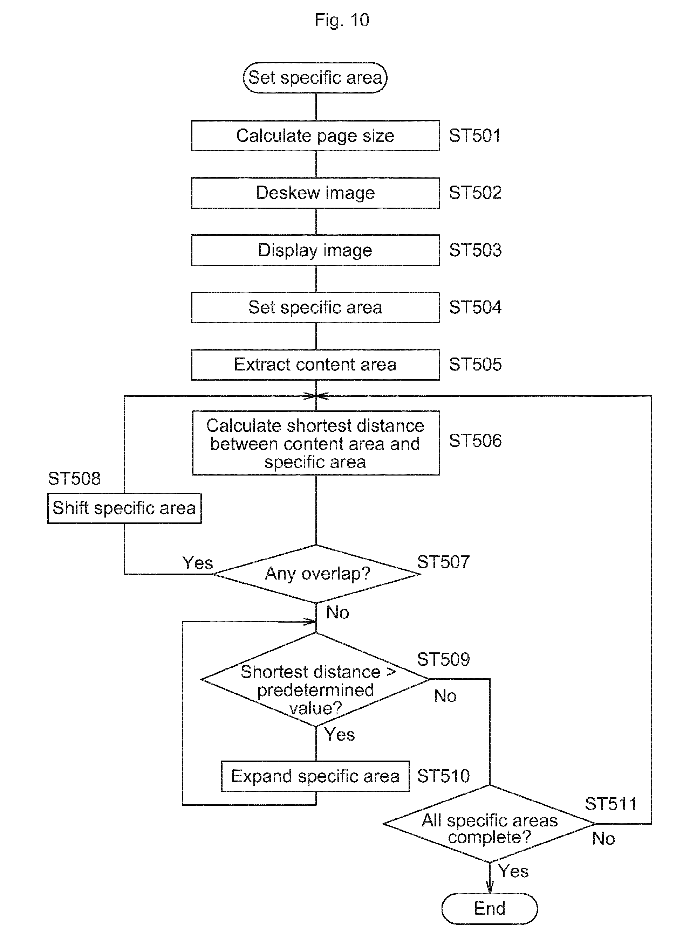

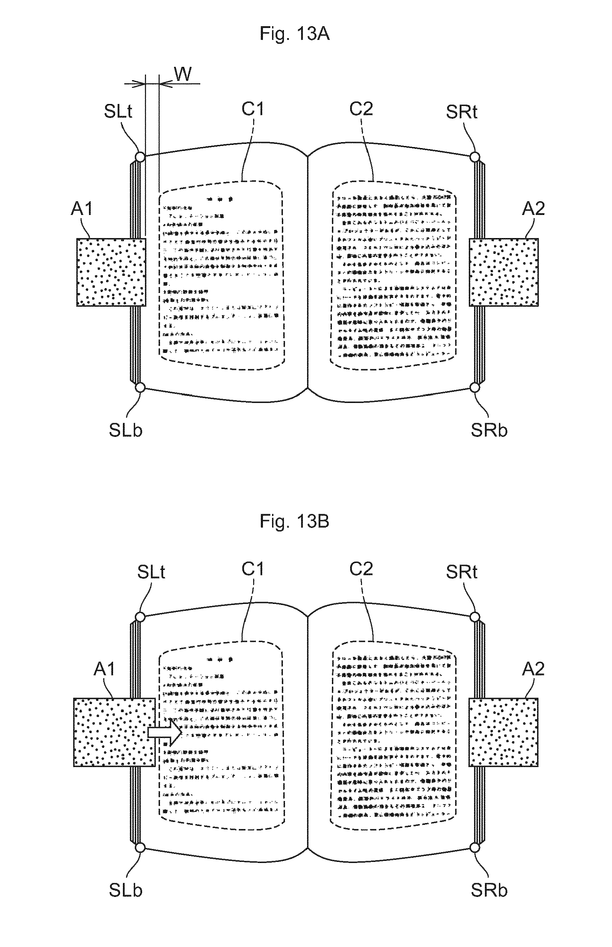

Fig. 10 is a flowchart illustrating steps of specific area setting (ST 406) shown in Fig. 9. Fig. 11A is a schematic diagram describing a procedure of the specific area setting. Fig. 11B is a schematic diagram describing a procedure of finger identification in the specific area. Fig. 12A is a schematic diagram describing a state before making a change in a procedure to re-set the set specific area. Fig. 12B is a schematic diagram describing a state after making the change in the procedure to re-set the set specific area. Fig. 13A is a schematic diagram describing a state before making a change in a procedure to re-set the set specific area. Fig. 13B is a schematic diagram describing a state after making the change in the procedure to re-set the set specific area.

First, the specific area setter 33 calculates a document size (size of a two-page spread, in this embodiment) based on the singular points obtained from the page outline detector 32 (ST 501). Subsequently, the image recorder 36 deskews (corrects the skew of) the captured image with known processing (ST 502), and then displays the deskewed image on the second image display frame of the display 26 (ST 503). Thereafter, the specific area setter 33 arranges the first and second specific areas A1 and A2 in the captured image according to the page size (ST 504).

In this embodiment, a table of information including a plurality of page sizes and corresponding information (coordinates) for the first and second specific areas A1 and A2 is prepared in advance. Based on the information in the table, the specific area setter 33 can set the first and second specific areas A1 and A2. In this case, when the information in the table does not include any page size that matches with the calculated page size, the coordinates of the specific areas are determined based on a page size having the closest value. Alternatively, the specific area may be calculated based on a predetermined formula.

As shown in Fig. 11A, a page size is determined based on coordinate data $(Xa,Ya)$, $(Xa,Yb)$, $(Xb,Ya)$, and $(Xb,Yb)$ of four singular points SLt, SLb, SRt, and SRb, which are edge points at top left, bottom left, top right, and bottom right of the page. In the first and second specific areas A1 and A2 here, the left and right edges of the respective rectangles are each parallel to the Y axis direction, and the top and bottom edges of the respective rectangles are each parallel to the X axis direction. Further, in the first specific area A1, coordinates X1 and X2 of the left and right edge positions and coordinates Y2 and Y1 of the top and bottom edge positions satisfy the relationships of the following formulas 1 and 2.

$$X1 < Xa < X2 \text{ --- (formula 1)}$$

$$Ya < Y1 < Y2 < Yb \text{ --- (formula 2)}$$

Specifically, the first specific area A1 straddles the left edge (coordinate Xa) of the left page in the left-right direction and is also positioned in the middle of the page top and the page bottom. In particular, it is preferable that the position of the vertical direction center of the page be aligned with the position of the vertical direction center of the first specific area A1.

Similarly, in the second specific area A2, coordinates X3 and X4 of the left and right edge positions and the coordinates Y2 and Y1 of the top and bottom edge positions satisfy the relationships of the following formulas 3 and 4.

$$X3 < Xb < X4 \text{ --- (formula 3)}$$

$$Ya < Y1 < Y2 < Yb \text{ --- (formula 4)}$$

Specifically, the second specific area A2 straddles the right edge (coordinate Xb) of the right page in the left-right direction and is also positioned in the middle of the page top and the page bottom. It is preferable that the size and vertical direction position of the second specific area A2 be set to be the same as those of the first specific area A1, but such a limitation is not necessarily required.

Further, as shown in Fig. 11 B, the motion of the left finger is detected when the coordinates $(X5,Y5)$ and $(X6,Y6)$ of the fingertips (two fingertips, in this embodiment) detected by the finger identifier 31 are within the first specific area A1. Similarly, the motion of the right finger is detected when the coordinates $(X7,Y7)$ and $(X8,Y8)$ of the two fingertips are within the second specific area A2.

As described above, after the two specific areas A1 and A2 are positioned, the specific area setter 33 extracts a content area (ST 505) as shown again in Fig. 10. In this embodiment, as shown in Fig. 12A, a content area C1 and a content area C2 are each extracted in the left and right pages, respectively. Subsequently, the specific area setter 33 calculates a shortest distance between each content area and the corresponding specific area (for example, distance between the left edge of the content area C1 and the right edge of the specific area A1) (ST 506). The specific area setter 33 further determines an overlap between the two areas based on the shortest distance (ST 507). Then, as shown in Fig. 12A, when there is an overlap between the two areas (Yes), the specific area (first specific area A1 in Fig. 12B) is shifted outward (to the left, in this embodiment) by a predetermined distance so as to be separated from the content area (ST 508). Thereafter, the process goes back again to ST 506, and the steps from ST 506 to ST 508 are repeated until the overlaps between all the specific areas and the corresponding content areas are ultimately removed. Thereby, it is possible to prevent the content in the image from being covered by a user's finger (in other words, from being partially missing in the captured image).

On the other hand, when there is no overlap between the specific area and the content area (ST 507: No), it is determined whether or not the shortest distance calculated in ST 506 exceeds the predetermined value (ST 509). Then, as shown in Fig, 13A, when a shortest distance W exceeds a predetermined value (predetermined threshold value) (in other words, when the content area and the specific area are exceedingly separated from each other), the internal side of the specific area (right edge side of the first specific area A1 in Fig. 12B) is expanded so as to extend by a predetermined length until the shortest distance W becomes the predetermined value or less (ST 510) as shown in Fig. 13B. The expansion of the specific area is repeated until the shortest distance W ultimately becomes the predetermined value or less. Thereby, even when the document is thick, it is possible to securely and properly maintain the paper surface during scanning. Further, although the specific area is expanded here, it is also possible to shift the specific area inward until the shortest distance W becomes the predetermined value or less without changing the size of the specific area.

Thereafter, with respect to all the specific areas, it is determined whether or not the overlaps with the content areas have been removed (ST 507). When processing is ultimately complete with respect to all the specific areas (ST 511) (Yes), the setting of the specific areas is complete.

Further, the above-described processing from ST 505 to ST 510 to prevent the overlaps between the specific areas and the content areas may be omitted according to necessity.

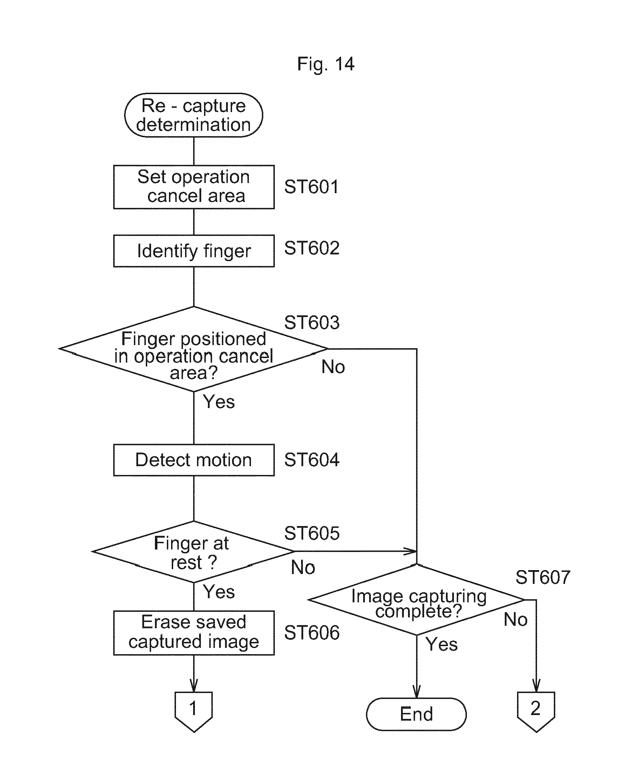

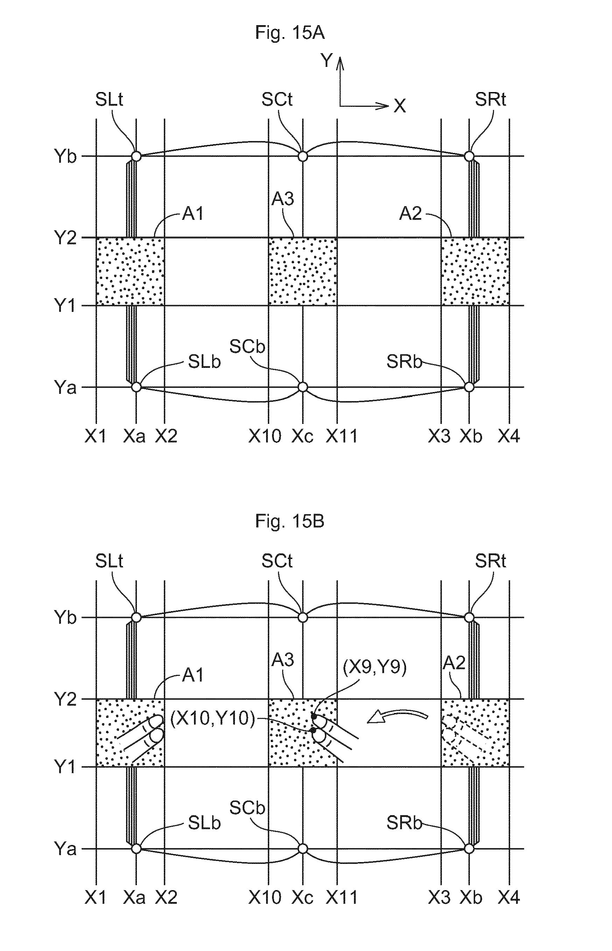

Fig. 14 is a flowchart illustrating steps of re-capture determination (ST 417) shown in Fig. 9. Fig. 15A is a schematic diagram describing a procedure to set an operation cancel area. Fig. 15B is a schematic diagram describing a procedure of finger identification in the operation cancel area.

First, in a similar way to the arrangement of the first and second specific areas A1 and A2, the specific area setter 33 sets a rectangle-shaped operation cancel area A3 (ST 601) shown in Fig. 15A. The position and size of the operation cancel area A3 are determined based on the six singular points SLt, SLb, SRt, SRb, SCt, and SCb. In the operation cancel area A3 here, the left and right edges of the rectangle are each parallel to the Y axis direction. Further, the upper and lower edges of the rectangle are each parallel to the X axis direction, and are located in the same position of the first and second specific areas A1 and A2. In the operation cancel area A3, the coordinates of the left and right edges X10 and X11 satisfy the relationship of the following formula 5.

$$X10 < Xc < X11 \text{ --- (formula 5)}$$

Specifically, the operation cancel area A3 straddles the center (coordinate Xc) between the two pages in the left-right direction and also is positioned in the middle of the page top and the page bottom. The coordinates of the top and bottom edges of the operation cancel area A3 do not have to be in the same position as those of the first and second specific areas; however, operability for a user is increased when they are in the same positions.

As described above, after the operation cancel area A3 is set, as shown in Fig. 14 again, the finger identifier 31 identifies fingers in the operation cancel area A3 (ST 602). The finger identifier 31 then determines whether or not the fingers are positioned in the operation cancel area A3 (ST 603). At this point, as shown in Fig. 15B, when the user's right finger is determined to be positioned within the specific area (Yes), the motion of the finger is detected (ST 604). In detecting the motion, when it is determined that the user's finger in the operation cancel area A3 remains still for at least a predetermined time period (in other words, it is determined that the user has given an instruction to cancel the operation) (ST 605: Yes), the image recorder 36 cancels the operation in ST 414 in Fig. 9 despite the user's instruction to perform the operation in ST 411 (Yes). The image recorder 36 further erases the image stored in ST 414 (ST 606). On the other hand, when no finger is detected in the operation cancel area A3 or when the finger of the user in the operation cancel area A3 remains still for at least a predetermined time period (ST 605: No), processing goes back to ST 402 in Fig. 9 and repeats the same steps with respect to the next page until image capturing is ultimately completed (ST 607: Yes).

As described above, in a case where a user finds displacement or the like in an image when checking the image to be recorded, it is possible to cancel recording of the captured image without any special operation by moving the fingers on one side from the specific area to the operation cancel area and keeping them still for a predetermined time period.

The present invention has been described based on a specific embodiment. The embodiment is, however, simply an example and the present invention is not limited to the embodiment above. For example, finger identification in the above embodiment is performed with respect to both hands of the user; however, it may be performed with respect to one hand. In such a case, the specific area is set only on one side corresponding to the one hand (in other words, at least one specific area may be set). Further, in the embodiment above, the user's instruction to perform or cancel an operation is determined to have been given when the user's finger remains still for a predetermined time period in the specific area or in the operation cancel area. However, the determination is not made based only on the still finger, and an instruction to perform or cancel an operation may be determined by detecting a predetermined motion of a finger within an area. Further, it is not necessary to include all the components described in the embodiment above in the image processing apparatus and the image scanning system having the same according to the present invention. The components may be appropriately selected as needed within the scope of the present invention.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

**Claims**

1. An image processing apparatus (1) comprising:

   a captured image obtainer (22) obtaining a captured image of a paper surface of a document;

a specific area setter (33) setting a specific area (A1, A2) in the captured image;

a finger identifier (31) identifying a user's finger in the specific area;

a motion detector (35) detecting motion of the finger identified by the finger identifier; and

an image recorder (36) determining that the user has given an instruction to perform an operation when the motion detector detects that the finger remains still for at least a predetermined time period, and recording the captured image.

2. The image processing apparatus according to claim 1, wherein the finger identifier identifies a fingertip of the user.

3. The image processing apparatus according to claim 2, wherein the motion detector detects motion of the fingertip identified by the finger identifier.

4. The image processing apparatus according to claim 3, wherein the image recorder determines that the user has given an instruction to perform an operation when detecting that the fingertip remains still for at least a predetermined time period, and records the captured image.

5. The image processing apparatus according to claim 1, wherein the specific area setter sets the specific area in a position where the specific area does not overlap with a content area (C1, C2) included in the captured image.

6. The image processing apparatus according to claim 1 further comprising:

a captured image obtainer that extracts an outline element of the document from the captured image, wherein

the specific area setter sets the specific area based on a document size calculated from the outline element.

7. The image processing apparatus according to claim 1, wherein the specific area is configured with two areas arranged in each of left and right sides of the document in the captured image so as to correspond to left and right fingers of the user, respectively.

8. The image processing apparatus according to claim 4, wherein the specific area is configured with two areas arranged in each of left and right sides of the document in the captured image so as to correspond to left and right fingertips of the user, respectively.

9. The image processing apparatus according to claim 4, wherein, when a shortest distance between the content area included in the captured image and the specific area is longer than a predetermined threshold value, the specific area setter expands the specific area so that the shortest distance becomes at most the threshold value.

10. A document scanning system comprising:

the image processing apparatus according to one of claims 1 to 6; and

an image inputting device including a camera that captures an image.

11. An image processing apparatus comprising:

a captured image obtainer (22) obtaining a captured image of a paper surface of a document captured along with a placement surface;

a specific area setter (33) setting, in the captured image, a first specific area (A1) and a second specific area (A2), the second specific area being an area different from the first specific area;

a finger identifier (31) identifying a user's finger in the first specific area and the second specific area;

a first detector (35) detecting that the finger identified by the finger identifier remains still for at least a predetermined time period within the first specific area;

an image recorder (36) determining that the user has given an instruction to perform an operation and recoding the captured image based on a detection result of the first detector; and

a second detector (35) detecting that the finger identified by the finger identifier remains still for at least a predetermined time period within the second specific area after the captured image has been recorded; and

an image recording canceller cancelling the recording of the captured image based on a detection result of the second detector.

12. The image processing apparatus according to claim 11, wherein the finger identifier identifies a fingertip of the user in the first specific area and the second specific area.

13. The image processing apparatus according to claim 12, wherein the first detector detects that the fingertip identified by the finger identifier remains still for at least a predetermined time period within the first specific area.

14. The image processing apparatus according to claim 13, wherein the second detector detects that the fingertip identified by the finger identifier remains still for at least a predetermined time period within the second specific area after the captured image has been recorded; and
the image recording canceller cancels the recording of the captured image based on a detection result of the second detector

15. An image processing method including:

obtaining a captured image of a paper surface of a document;
setting a specific area in the captured image;
identifying a user's finger in the specific area;
detecting motion of the identified finger;
determining that the user has given an instruction to perform an operation when the finger remains still for at least a predetermined time period; and
recording the captured image.

Fig. 1

Fig. 2

PC 2

Book scanner 1

Image capturing processor 11 — Camera 3

Operation instructor 12

External interface 13

External interface 21

Image data inputter 22 — Captured image

Controller 24

Inputter 27

Display 26

Display data generator 25

Data storage 28

Finger identifier 23 / 31
First finger position detector 41
Second finger position detector 42

Page outline detector 32

Specific area setter 33

Content area identifier 34

Motion detector 35

Image recorder 36

Fig. 3

```
            ╭─────────────╮
            │    Start     │
            ╰─────────────╯
                   │
         ┌──────────────────┐
         │   Set document   │  ST101
         └──────────────────┘
                   │
         ┌──────────────────┐
         │   Input image    │  ST102
         └──────────────────┘
                   │
         ┌┤──────────────────┤┐
         │   Detect outline   │  ST103
         └┤──────────────────┤┘
                   │
         ┌┤──────────────────┤┐
         │ Generate mesh model │  ST104
         └┤──────────────────┤┘
                   │
         ┌──────────────────┐
         │  Transform image │  ST105
         └──────────────────┘
                   │
         ┌──────────────────┐
         │   Display image  │  ST106
         └──────────────────┘
                   │
         ┌──────────────────┐
         │   Store image    │  ST107
         └──────────────────┘
                   │
            ╭─────────────╮
            │     End      │
            ╰─────────────╯
```

Fig. 4

```
        ┌─────────────────────┐
        │  Outline detection  │
        └─────────────────────┘
                   │
    ┌──────────────┼
    │              ▼
    │   ┌─────────────────────┐
    │   │   Detect straight   │  ST201
    │   │    line element     │
    │   └─────────────────────┘
    │              │
    │   ┌─────────────────────┐
    │   │     Detect edge     │  ST202
    │   └─────────────────────┘
    │              │
    │   ┌─────────────────────┐
    │   │ Extract outline element │  ST203
    │   └─────────────────────┘
    │              │
    │   ┌─────────────────────┐
    │   │ Detect singular point │  ST204
    │   └─────────────────────┘
    │              │
    │          ╱───────╲        ST205
    │        ╱  Determine ╲
    └──────◄ adequacy of singular point ►
      No     ╲    OK?    ╱
              ╲───────╱
                  │ Yes
        ┌─────────────────────┐
        │ Confirm singular point │  ST206
        └─────────────────────┘
                  │
        ┌─────────────────────┐
        │        End          │
        └─────────────────────┘
```

## Fig. 5A

Main straight line element

B

Main straight line element

Main straight line element

## Fig. 5B

Singular point SLt

B

Singular point SCt

Singular point SRt

Singular point SLb

Singular point SCb

Singular point SRb

Fig. 6

```
        ┌──────────────────────┐
        │     Mesh model       │
        │     generation       │
        └──────────────────────┘
                   │
        ┌──────────────────────┐
        │  Extract distortion  │   ST301
        │      element         │
        └──────────────────────┘
                   │
              ╱─────────╲
     No      ╱ Determine  ╲      ST302
    ◄───────◄ adequacy of  ►
            ╲ distortion  ╱
             ╲   OK?     ╱
              ╲─────────╱
    │                │ Yes
┌──────────────┐     │
│Interpolation │ ST303
│ processing   │     │
└──────────────┘     │
    │                │
    └───────►────────┤
                     │
        ┌──────────────────────┐
        │ Compute height element│  ST304
        └──────────────────────┘
                   │
        ┌──────────────────────┐
        │  Generate mesh line  │   ST305
        └──────────────────────┘
                   │
        ┌──────────────────────┐
        │ Store mesh intersection│  ST306
        │    point in table    │
        └──────────────────────┘
                   │
        ┌──────────────────────┐
        │        End           │
        └──────────────────────┘
```

16

## Fig. 7A

Distortion element   Distortion element

B

Distortion element   Distortion element

## Fig. 7B

Vertical mesh line   Horizontal mesh line   Reference point   Reference point

B

Mesh intersection point

Reference point   Reference point

EP 2 549 732 A1

Fig. 8

Planarized image

18

Fig. 9

```
        2
            ( Automatic )
    1
            | Set document |    ST401

            | Turn page |    ST402

            | Input image
              (low resolution) |    ST403

            | Display image |    ST404

            | Detect outline |    ST405

            | Set specific area |    ST406

            | Identify finger |    ST407

                                    ST408
            < Finger positioned
              in first specific
              area? >    No
                Yes
                                    ST409
            < Finger positioned
              in second specific
              area? >    No
                Yes
            | Detect motion |    ST410

                                    ST411
            < Finger at
              rest ? >    No
                Yes
            | Change image
              capturing setting |    ST412


            | Input image
              (high resolution) |    ST413

            | Store and display
              captured image |    ST414

            | Change image
              capturing setting |    ST415

            | Input image
              (low resolution) |    ST416

            | Determine
              re - capture |    ST417

                                    ST418
            < Image capturing
              complete? >    No
                Yes
            ( End )
```

Fig. 10

```
        ( Set specific area )
                 |
    +-------------------------+
    |   Calculate page size   |  ST501
    +-------------------------+
                 |
    +-------------------------+
    |      Deskew image       |  ST502
    +-------------------------+
                 |
    +-------------------------+
    |      Display image      |  ST503
    +-------------------------+
                 |
    +-------------------------+
    |    Set specific area    |  ST504
    +-------------------------+
                 |
    +-------------------------+
    |   Extract content area  |  ST505
    +-------------------------+

    +-------------------------------+
    |  Calculate shortest distance  |
    |   between content area and    |  ST506
    |         specific area         |
    +-------------------------------+

ST508
+---------------------+
| Shift specific area |
+---------------------+

     Yes  < Any overlap? >   ST507
                 | No

         < Shortest distance >      ST509
           predetermined
              value? >              No
                 | Yes

    +----------------------+
    | Expand specific area |  ST510
    +----------------------+

         < All specific areas        ST511
            complete? >               No
                 | Yes

            ( End )
```

Fig. 11A

Fig. 11B

Fig. 12A

Fig. 12B

Fig. 13A

Fig. 13B

Fig. 14

```
           ┌──────────────────┐
           │   Re - capture   │
           │  determination   │
           └──────────────────┘
                    │
           ┌──────────────────┐
           │  Set operation   │  ST601
           │   cancel area    │
           └──────────────────┘
                    │
           ┌──────────────────┐
           │  Identify finger │  ST602
           └──────────────────┘
                    │
                                     ST603
              ◇ Finger positioned
                in operation cancel ────── No ──────┐
                     area?                          │
                    │                               │
                   Yes                              │
                    │                               │
           ┌──────────────────┐                     │
           │  Detect motion   │  ST604              │
           └──────────────────┘                     │
                    │                               │
                                 ST605              │
              ◇ Finger at                           │
                 rest ? ──── No ───────────────────►│
                    │                               │
                   Yes                         ST607 │
                    │                               │
           ┌──────────────────┐      ◇ Image capturing
           │   Erase saved    │ ST606   complete? ─── No ──┐
           │  captured image  │          │                │
           └──────────────────┘         Yes               │
                    │                     │                │
                    ▼                     ▼                ▼
                   ⬡ 1              ┌──────────┐          ⬡ 2
                                    │   End    │
                                    └──────────┘
```

Fig. 15A

Fig. 15B

## EUROPEAN SEARCH REPORT

Application Number

EP 12 16 4745

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 377 019 A (OKISU NORIYUKI [JP] ET AL) 27 December 1994 (1994-12-27) * the whole document * ----- | 1-15 | INV. H04N1/195 H04N1/00 G06F3/042 |
| Y | US 2007/146320 A1 (KUBOTA AKIRA [JP]) 28 June 2007 (2007-06-28) * figure 4 * * paragraphs [0041], [0056] * ----- | 1-15 | |
| Y | US 6 697 536 B1 (YAMADA KEIJI [JP]) 24 February 2004 (2004-02-24) * figures 1,10 * * column 1, lines 24-27 * ----- | 1-15 | |
| Y | US 2007/188830 A1 (WATANUKI MASATOSHI [JP]) 16 August 2007 (2007-08-16) * paragraph [0024] * ----- | 1-15 | |
| Y | US 6 256 411 B1 (IIDA KENTARO [JP]) 3 July 2001 (2001-07-03) * figures 9-11 * * column 7, line 24 - column 8, line 23 * ----- | 1-15 | TECHNICAL FIELDS SEARCHED (IPC) H04N G06F |
| A | EP 1 067 757 A1 (HEWLETT PACKARD CO [US]) 10 January 2001 (2001-01-10) * the whole document * ----- | 1-15 | |

The present search report has been drawn up for all claims

| Place of search | Date of completion of the search | Examiner |
|---|---|---|
| Munich | 23 July 2012 | Moorhouse, David |

EPO FORM 1503 03.82 (P04C01)

**ANNEX TO THE EUROPEAN SEARCH REPORT
ON EUROPEAN PATENT APPLICATION NO.**                    EP 12 16 4745

23-07-2012

| Patent document cited in search report | | Publication date | Patent family member(s) | | Publication date |
|---|---|---|---|---|---|
| US 5377019 | A | 27-12-1994 | NONE | | |
| US 2007146320 | A1 | 28-06-2007 | JP | 2007172303 A | 05-07-2007 |
| | | | US | 2007146320 A1 | 28-06-2007 |
| US 6697536 | B1 | 24-02-2004 | JP | 3475849 B2 | 10-12-2003 |
| | | | JP | 2000308045 A | 02-11-2000 |
| | | | US | 6697536 B1 | 24-02-2004 |
| US 2007188830 | A1 | 16-08-2007 | JP | 4424314 B2 | 03-03-2010 |
| | | | JP | 2007208821 A | 16-08-2007 |
| | | | US | 2007188830 A1 | 16-08-2007 |
| US 6256411 | B1 | 03-07-2001 | JP | 10336439 A | 18-12-1998 |
| | | | US | 6256411 B1 | 03-07-2001 |
| EP 1067757 | A1 | 10-01-2001 | DE | 60037865 T2 | 04-12-2008 |
| | | | EP | 1067757 A1 | 10-01-2001 |
| | | | EP | 1110373 A1 | 27-06-2001 |
| | | | JP | 4623898 B2 | 02-02-2011 |
| | | | JP | 2003504772 A | 04-02-2003 |
| | | | US | 6885479 B1 | 26-04-2005 |
| | | | WO | 0105140 A1 | 18-01-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011159873 A

- JP 2001103240 A